# EUROPEAN PATENT APPLICATION

(11) **EP 4 454 835 A1**
(43) Date of publication of application: **30.10.2024**
(21) Application number: 23815006.4
(22) Date of filing: 22.05.2023
(51) Int. Cl.: B25J 15/00, B25J 15/02

(54) **ALIGNMENT ADJUSTMENT MECHANISM**

(30) Priority: 30.05.2022 CN 202210604097
(71) Applicant: Contemporary Amperex Technology Co., Limited, Ningde, Fujian 352100 (CN)
(72) Inventor: SUI, Zhenjie, Ningde, Fujian 352100 (CN); HU, Xiaofeng, Ningde, Fujian 352100 (CN)
(74) Representative: Rowlands, Stuart Michael
(86) International application number: PCT/CN2023/095614
(87) International publication number: WO 2023/231822

(57) **Abstract**

Provided in the embodiments of the present application is an alignment adjustment mechanism used for performing alignment adjustment on a plurality of assemblies. The alignment adjustment mechanism comprises a connecting rod, which extends in a first direction; and at least two clamping jaws, which are arranged on the connecting rod at intervals in the first direction. Each clamping jaw comprises a main body portion, which extends in a second direction, the first direction being perpendicular to the second direction; and clamping portions, which are arranged on the main body portion in a spaced manner in the second direction to form a clamping space, wherein the clamping portions can move in the second direction to adjust the size of the clamping space in the second direction, so as to realize alignment adjustment of the assemblies. The alignment adjustment mechanism can perform alignment adjustment on battery cells and related assemblies during arrangement and assembly of the battery cells and the related assemblies, such that a good alignment effect is achieved, thereby increasing the yield of products.

## Description

This application claims priority to Chinese Patent Application No. 202210604097.1, filed with the China National Intellectual Property Administration on May 30, 2022 and entitled "ALIGNMENT MECHANISM", which is incorporated herein by reference in its entirety.

### TECHNICAL FIELD

Embodiments of this application relate to the field of batteries and, more specifically, to an alignment mechanism.

### BACKGROUND

As an important power device, batteries have been widely developed and applied in fields such as electronic devices and transportation tools, and the development of battery technology has received increasing attention. To support the continuous energy supply in daily production and life, multiple battery cells and related components are usually connected according to different power demands to provide more electrical energy.

However, in the arrangement of multiple battery cells and related components, it is difficult to align the multiple components with each other, which can easily have adverse effects in the subsequent assembly process.

### SUMMARY

Embodiments of this application provide an alignment mechanism that can adjust the alignment of battery cells and related components during the arrangement and assembly process of the battery cells and related components, making multiple components align with each other, thereby improving the product qualification rate.

According to a first aspect, an alignment mechanism is provided for aligning multiple components. The alignment mechanism includes: a connecting rod, arranged to extend along a first direction; and at least two claws, spaced from each other along the first direction on the connecting rod. The claw includes: a main body, where the main body extends along a second direction, and the first direction is perpendicular to the second direction; and holding parts spaced from each other along the second direction on the main body to form a holding space, where the holding parts are movable along the second direction to adjust size of the holding space in the second direction, thereby achieving alignment of the components.

Equipped with multiple claws, the alignment mechanism provided by the embodiments of this application can adjust the position of multiple components, making the centerline of each component in the second direction located on a plane perpendicular to the second direction. This can align multiple components with each other during the arrangement and assembly process of different-sized components, thereby improving the product qualification rate.

In some embodiments, each of the at least two claws is configured to adjust one of the multiple components.

The alignment mechanism provided by the embodiments of this application can individually adjust the position of each component among multiple components. When sizes of the components that need to be aligned in the second direction are not completely the same, it can not only adjust the largest component but also make multiple different-sized components align with each other, thereby improving the product qualification rate.

In some embodiments, the components include at least a first component and a second component. The at least two claws include a first claw and a second claw. The first claw includes first holding parts, where the first holding parts form a first holding space, the first component is accommodated in the first holding space, and the first holding parts are configured to adjust size of the first holding space based on a first position of the first component to adjust the first claw and fix the first claw at a second position, making centers of the first claw and the first component in the second direction located on a first plane, where the first plane is perpendicular to the second direction. The second claw includes second holding parts, where the second holding parts form a second holding space, the second component is accommodated in the second holding space, and the second holding parts are configured to adjust size of the second holding space to adjust the second component to a third position, making centers of the second component and the second claw in the second direction located on the first plane.

The alignment mechanism provided by the embodiments of this application can take the position of a previous component as a reference to align the center of the next component with the center of the previous component, gradually individually adjusting each component among the multiple components. When sizes of the components that need to be aligned in the second direction are not completely the same, it can ensure that each component can be adjusted, thereby achieving the consistency of alignment among multiple components and improving the product qualification rate.

In some embodiments, the alignment mechanism further includes: a fixing block, where the fixing block is configured to fix the first component at the first position.

Providing the fixing block can achieve the fixation of the first component, reducing the possibility of moving the first component when adjusting the position of the claw based on the first position of the first component, which is beneficial to maintain the stability of the first component.

In some embodiments, two ends of the main body in the second direction are each provided with an extension part extending along a third direction, where the extension parts are configured to connect the main body and the holding parts.

The extension parts connect the main body and the holding parts, providing a connecting function for the parallel arrangement of the main body and holding parts, which is beneficial for the holding parts to adjust the size of the holding space in the second direction, thereby achieving the alignment of the components.

In some embodiments, the alignment mechanism further includes: a push rod, where the push rod is configured to push the second component towards the first component along the first direction after the second component is adjusted to the third position.

After the components are aligned, the push rod can push the second component towards the first component, making them fit together. In the case where an adhesive is pre-applied to both, this also helps in adhering the first component to the second component. Furthermore, this can also reduce the space required for the support plate, improving the space utilization rate of the assembly station.

In some embodiments, the alignment mechanism further includes: a limiting block, where the limiting block is configured to restrict movement of the second component in the third direction.

During the process of moving the component to adjust its position, the limiting block can restrict the movement of the component in the third direction, that is, limiting the position of the component can reduce the possibility of the component overturning during its movement in the first direction or the second direction, thereby making the component comparatively stable during alignment adjustment, improving work efficiency, and achieving a good alignment effect.

In some embodiments, the fixing block is configured to fix the first component in the third direction, and the fixing block is provided with a platform part, the platform part being perpendicular to the third direction.

The provision of the platform part allows for a larger force-bearing area on the first component when the fixing block applies pressure to the first component, reducing the possibility of damage to the surface of the first component due to pressure.

In some embodiments, the alignment mechanism further includes: a first slide rail, where the first slide rail extends along the second direction, and the claw is provided with a connecting part, with a first end of the connecting part fixedly connected to the claw and a second end of the connecting part connected to the first slide rail, where the second end is able to slide along the second direction in the first slide rail.

The provision of the first slide rail enables the movement of the claw in the second direction, allowing the claw to be adjusted in the second direction based on the position of the component. Moreover, the connecting part, claw, and connecting rod are fixedly connected and move together, which can also make the component and the claw always align with the same reference, improving the accuracy of alignment and the product qualification rate.

In some embodiments, the first slide rail is provided with a first locking mechanism, where the first locking mechanism is configured to restrict movement of the claw along the first slide rail.

After the position adjustment of the claw is completed, the first locking mechanism can fix the position of the claw on the first slide rail, so that the same reference is used for adjustment when the claw adjusts other components in the second direction. This way, the components can all be adjusted with the same reference, allowing for alignment of multiple components, achieving a good alignment effect, and thereby improving the product qualification rate.

In some embodiments, the alignment mechanism further includes: a second slide rail, where the second slide rail extends along the first direction, and the first slide rail is able to slide along the first direction in the second slide rail.

The provision of the second slide rail enables movement of the claw in the first direction, allowing the claw to flexibly move along the first direction when multiple components need to be aligned, thereby achieving the alignment of all components. The provision of the second slide rail can also make the alignment mechanism suitable for the alignment of components of various specifications, reducing production costs.

In some embodiments, the alignment mechanism further includes: a support bracket, where the support bracket is configured to support the second slide rail.

The support bracket can fix the second slide rail at a corresponding position in the assembly station, allowing the claw to move within a preset range, thus achieving automated adjustment, saving labor input, and improving production efficiency.

In some embodiments, the second slide rail is provided with a second locking mechanism, where the second locking mechanism is configured to restrict movement of the first slide rail along the second slide rail.

The restriction of the movement of the claws in the first direction by the second locking mechanism can put the claws in appropriate positions to adjust the alignment of the components, reducing the possibility of misalignment between the claws and the components that could lead to incorrect adjustment of the components. This can improve the accuracy of alignment of the components by the claws, thereby improving the product qualification rate.

In some embodiments, the distance between the first claw and the second claw is 5-10 mm.

An appropriate distance can both save space required for placing components and avoid the adhesion of adjacent components before adjustment due to placement errors, which is conducive to the alignment of components, making the centerline of each component in the second direction located on a plane perpendicular to the second direction, achieving a good alignment effect, and thereby improving the product qualification rate.

In some embodiments, a maximum distance the holding part moves along the second direction is 5-10 mm.

An appropriate distance allows for accommodation of components of most sizes within the holding space without requiring the holding parts to move a long distance to achieve the alignment of the components, making the alignment mechanism provided by the embodiments of this application suitable for components of various sizes, achieving a good alignment effect while also improving production efficiency.

In some embodiments, the first claw includes a first main body, where the first main body is provided with a third slide rail extending along the second direction, the fixing block is connected to the third slide rail, and the fixing block is able to slide along the third slide rail.

The fixing block is connected to the first main body through the third slide rail, which enables a more accurate application of pressure to the first component, thereby fixing the first component at the first position, allowing the alignment mechanism to adjust the alignment of components with a fixed reference, achieving a good alignment effect.

### BRIEF DESCRIPTION OF DRAWINGS

To describe the technical solutions in the embodiments of this application more clearly, the following briefly describes the accompanying drawings required for describing the embodiments of this application. It will be apparent that the accompanying drawings in the following description show merely some embodiments of this application, and a person of ordinary skill in the art may still derive other drawings from the accompanying drawings without creative efforts.
FIG. 1 is a schematic exploded view of a structure of a battery according to some embodiments of this application.
FIG. 2 is a schematic diagram of an alignment mechanism according to some embodiments of this application.
FIG. 3 is a schematic diagram showing the alignment of components according to some embodiments of this application.
FIG. 4 is a schematic diagram of another alignment mechanism according to some embodiments of this application.
FIG. 5 is a schematic diagram showing the alignment of components from the view of a first direction according to some embodiments of this application.

### DESCRIPTION OF EMBODIMENTS

The following further describes the embodiments of this application in detail with reference to the accompanying drawings and embodiments. The detailed description of the embodiments and the accompanying drawings are intended to illustrate the principle of this application rather than to limit the scope of this application, meaning this application is not limited to the embodiments described herein.

In the description of this application, it should be noted that, unless otherwise stated, "multiple" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "have", and any other variations thereof in the specification, claims and brief description of drawings of this application are intended to cover non-exclusive inclusions.

The orientation terms appearing in the following description all are directions shown in the figures, and do not limit the specific structure of the application. In the descriptions of this application, it should be further noted that unless otherwise specified and defined explicitly, the terms "mount", "connect", and "join" should be understood in their general senses. For example, they may refer to a fixed connection, a detachable connection, or an integrated connection, and they may refer to a direct connection or an indirect connection through an intermediate medium. Persons of ordinary skill in the art can understand specific meanings of these terms in this application as appropriate to specific situations.

In the embodiments of this application, like reference signs denote like components, and for brevity, in different embodiments, detailed descriptions of like components are not repeated. It should be understood that, as shown in the accompanying drawings, sizes such as thickness, length, and width of various components and sizes such as thickness, length, and width of integrated devices in the embodiments of this application are merely for illustrative purposes and should not constitute any limitations on this application.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can make it less likely for liquids or other foreign matter to affect charging or discharging of the battery cells.

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. Battery cells are typically divided into three types by packaging method: cylindrical cell, prismatic cell, and pouch cell. The type of battery cell is not limited in the embodiments of this application either.

To meet different power requirements, the battery may include multiple battery cells, and the multiple battery cells may be connected in series, parallel, or series-parallel, where being connected in series-parallel means a combination of series and parallel connections. Optionally, multiple battery cells may be connected in series, parallel, or series-parallel to form a battery module first, and then multiple battery modules are connected in series, parallel, or series-parallel to form a battery. In a word, the multiple battery cells may be directly combined into a battery, or may first be combined into battery modules that are then combined into a battery. The battery is further provided in an electric device to supply electrical energy to the electric device.

Multiple battery cells are often arranged together with some related components during the arrangement process. For example, battery cells can be arranged together with end plates, thermal insulation pads, cushioning pads, and other components in a certain order. To facilitate subsequent assembly and fixing of these components, it is necessary to adjust the alignment of the components, including the battery cells, that is, to adjust the centerlines of the arranged components to a straight line.

Considering that the sizes of these components may all be different, and due to errors in the production process, the widths of the even same type of components themselves are not exactly the same. If the width direction is adjusted directly by an adjustment plate for all the components simultaneously, the adjustment plate can only contact the widest component and it is impossible to make the centers of other width components located on the same straight line.

Therefore, this application provides an alignment mechanism. This alignment mechanism can individually adjust the alignment of each component in the width direction by setting multiple claws at intervals in the direction of component arrangement, thereby making the centerline of each component in the width direction located on the same straight line. Here, the direction of component arrangement is perpendicular to the width direction of the components.

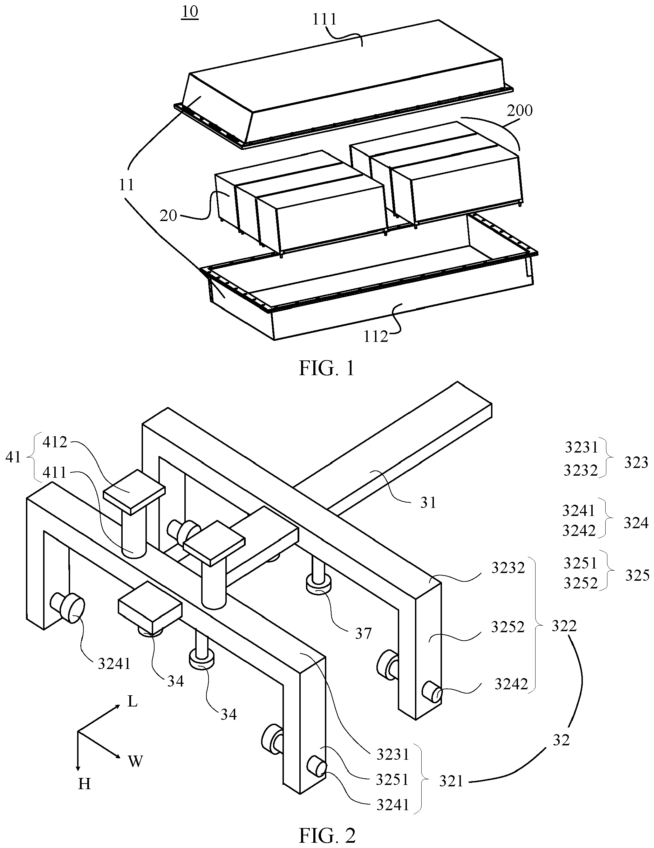

FIG. 1 is a schematic structural diagram of a battery 10 according to an embodiment of this application. The battery 10 may include at least one battery module 200. The battery module 200 includes a plurality of battery cells 20. The battery 10 may further include a box 11. Inside of the box 11 is a hollow structure. The plurality of battery cells 20 are accommodated in the box 11. FIG. 1 shows a possible implementation of the box 11 in the embodiments of this application. As shown in FIG. 1, the box 11 may include two portions that are referred as a first box portion 111 and a second box portion 112 respectively, and the first box portion 111 and the second box portion 112 are snap-fitted. Shapes of the first box portion 111 and the second box portion 112 may be determined according to the shape of the combination of battery modules 200. At least one of the first box portion 111 and the second box portion 112 is provided with an opening. For example, as shown in FIG. 1, the first box portion 111 and the second box portion 112 each may be a hollow cuboid and have only one face with an opening, where the opening of the first box portion 111 and the opening of the second box portion 112 are opposite each other, and the first box portion 111 and the second box portion 112 are snap-fitted to form a box 11 having a closed chamber.

For another example, unlike FIG. 1, it is possible that only one of the first box portion 111 and the second box portion 112 is a hollow cuboid with an opening, and the other may be a plate for covering the opening. For example, an example is used where the second box portion 112 is a hollow cuboid and has only one face with an opening and the first box portion 111 is a plate. Therefore, the first box portion 111 covers the opening of the second box portion 112 to form a box 11 with a closed chamber. The chamber may be configured for accommodating the multiple battery cells 20. The multiple battery cells 20 are connected in parallel, series, or series-parallel, and then put into the box 11 formed by snap-fitting the first box portion 111 and the second box portion 112.

Optionally, the battery 10 may further include other structures. Details are not described herein. For example, the battery 10 may further include a busbar, where the busbar is configured to implement an electrical connection among multiple battery cells 20, for example, a parallel connection, a series connection, or a series-parallel connection. Specifically, the busbar may implement the electrical connection among the battery cells 20 by connecting electrode terminals of the battery cells 20. Further, the busbar may be fixed to the electrode terminal of the battery cell 20 by welding. Electrical energy of the multiple battery cells 20 may be further led out through a conductive mechanism that passes through the box 11.

Depending on different power needs, battery cells 20 in the battery module 200 may be provided in any quantity. The multiple battery cells 20 may be connected in series, parallel, or series-parallel to achieve greater capacity or power. Because each battery 10 may include a large quantity of battery cells 20, for ease of installation, the battery cells 20 may be arranged by group, and each group of battery cells 20 form a battery module 200. The quantity of battery cells 20 included in the battery module 200 is not limited, and may be set as required.

The battery 10 may include a plurality of battery modules 200. These battery modules 200 may be connected in series, parallel, or series-parallel.

To achieve the alignment of multiple components 33 inside a battery during the assembly process of the battery, the embodiments of this application provide an alignment mechanism for adjusting alignment of multiple components 33. As shown in FIG. 2, the alignment mechanism includes a connecting rod 31 and at least two claws 32.

The connecting rod 31 is arranged to extend along a first direction L. At least two claws 32 are spaced from each other along the first direction L on the connecting rod 31. The claw 32 includes: a main body 323, where the main body 323 extends along a second direction W, and the first direction L is perpendicular to the second direction W; and holding parts 324, spaced from each other along the second direction W on the main body 323 to form a holding space, where the holding parts 324 are movable along the second direction W to adjust the size of the holding space in the second direction W, thereby achieving alignment of the components 33.

In the embodiments of this application, the alignment refers to adjusting the position of multiple components 33 in the second direction W, making the centerline of each component 33 in the second direction W located on a plane perpendicular to the second direction W, or in other words, making planes passing through the centers of components 33 and perpendicular to the second direction W located on the same plane.

The connecting rod 31 connects the at least two claws 32, where the two claws 32 can be fixedly connected to the connecting rod 31. That is, there is no relative movement between the claws 32 and the fixed rod and no relative movement between the claws 32. The arrangement of the connecting rod 31 along the first direction L means that the connecting rod 31 can connect the at least two claws 32 along the first direction L, where the connecting rod 31 can be a straight rod extending along the first direction L, or it can be other shapes of rods. For example, the connecting rod 31 can be in a cross shape between two claws 32. As long as the connecting rod 31 can connect multiple claws 32 along the first direction L, the connecting rod 31 is considered to be arranged along the first direction L. FIG. 2 only shows the case where the connecting rod 31 is a straight rod extending along the first direction L.

When multiple claws 32 are arranged along the first direction L, there is a gap between adjacent claws 32, and the size of this gap matches the gap size between adjacent components 33 placed along the first direction L. Before alignment is performed for the components 33, the largest surface area of components 33 will be glued to facilitate subsequent adhesion between components 33. When multiple components 33 are placed in sequence, the glued surface of the components 33 is usually perpendicular to the direction of arrangement of the components 33, that is, the glued surface of the components 33 is perpendicular to the first direction L. Therefore, during the alignment process between two adjacent components 33, it is necessary to maintain a certain gap between the two components 33 to reduce the possibility of the two sticking together and being unable to be adjusted. To adjust the position of each component 33 individually, each component 33 corresponds to one claw 32, and then there is also a matching gap between adjacent claws 32 for accurately adjusting the alignment of the components 33. FIG. 2 only shows the case where two claws 32 are arranged on the connecting rod 31. When there are more than two claws 32 arranged on the connecting rod 31 and more than two components 33 can be adjusted at a time, the distance between every two adjacent components 33 can be equal, and accordingly, the distance between every two adjacent claws 32 can also be equal.

The claw 32 includes a main body 323 and holding parts 324, as shown in FIG. 2. Taking one claw 32 in FIG. 2 as an example, the main body 323 refers to the part of the claw 32 that is fixed relative to the connecting rod 31, and the holding parts 324 refer to the parts of claw 32 that can move relative to the main body 323 along the second direction W. For example, the main body 323 can be a horizontal rod extending along the second direction W, and the holding parts 324 can extend along the third direction H at two ends of the main body 323. In this case, the main body 323 can be provided with a slide rail in the second direction W, allowing the holding parts 324 to move along the second direction W. For another example, the main body 323 can be in a bent shape shown in FIG. 2, that is, the main body 323 has a horizontal rod extending along the second direction W, and straight rods extending along a third direction H are provided at two ends of the horizontal rod in the second direction W, and the holding parts 324 that can move along the second direction W are then disposed on the straight rods, where the first direction L, the second direction W, and the third direction H are mutually perpendicular.

The holding parts 324 are spaced from each other along the second direction W on the main body 323, and then the gap between the holding parts 324 can form a holding space, and the size of the holding space changes as the holding parts 324 move along the second direction W. When components 33 are placed along the first direction L, the alignment mechanism usually needs to adjust the positions of the components 33 in the second direction W. When the holding parts 324 are symmetrically arranged on the main body 323 along the second direction W and move the same distance relative to each other at the same time, the symmetrical axis of the holding space in the second direction W always coincides with the symmetrical axis of the claw 32 in the second direction W. When the distance of the holding space in the second direction W is equal to the length of the component 33 in the second direction W, the center of the component 33 in the second direction W is on the same plane as the symmetrical axis of the claw 32 in the second direction W, and this plane is perpendicular to the second direction W. Then, the center of the component 33 can be adjusted based on the center of the claw 32. Similarly, other components 33 arranged along the first direction L can be adjusted in the same way to achieve the alignment of multiple components 33.

Equipped with multiple claws 32, the alignment mechanism provided by the embodiments of this application can individually adjust the position of each component 33 among multiple components. When sizes of the components that need to be aligned in the second direction W are not completely the same, it can not only adjust the largest component 33 but also adjust all different-sized components 33, making the centerline of each component 33 in the second direction W located on a plane perpendicular to the second direction W, achieving a good alignment effect during the arrangement and assembly process of the battery cells and related components 33, and thereby improving the product qualification rate.

According to some embodiments, optionally, each of the at least two claws 32 is configured to adjust one of the multiple components 33.

In the process of the claws 32 in the alignment mechanism adjusting the alignment of components 33, when the claws 32 are in a specific position along the first direction L, each of the at least two claws 32 adjusts only one component 33 corresponding to that position. After the claws 32 move along the first direction L to the next position, each claw 32 then adjusts another component 33 corresponding to the next position. That is, each claw 32 adjusts only one component 33 at a time.

The alignment mechanism provided by the embodiments of this application can individually adjust the position of each component 33 among multiple components. When sizes of the components 33 that need to be aligned in the second direction W are not completely the same, it can not only adjust the largest component 33 but also adjust all different-sized components 33, achieving a good alignment effect and thereby improving the product qualification rate.

According to some embodiments, optionally, the components 33 include at least a first component 331 and a second component 332. The at least two claws 32 include a first claw 321 and a second claw 322. The first claw 321 includes first holding parts 3241, where the first holding parts 3241 form a first holding space, the first component 331 is accommodated in the first holding space, and the first holding parts 3241 are configured to adjust size of the first holding space based on a first position of the first component 331 to adjust the first claw 321 and fix the first claw 321 at a second position, making centers of the first claw 321 and the first component 331 in the second direction W located on a first plane, where the first plane is perpendicular to the second direction W. The second claw 322 includes second holding parts 3242, where the second holding parts 3242 form a second holding space, the second component 332 is accommodated in the second holding space, and the second holding parts 3242 are configured to adjust size of the second holding space to adjust the second component 332 to a third position, making centers of the second component 332 and the second claw 322 in the second direction W located on the first plane.

Components 33 that need to be aligned can include, for example, end plates, battery cells, thermal insulation pads, cushioning pads, and the like, but the embodiments of this application are only illustrated with the first component 331 and the second component 332 as examples.

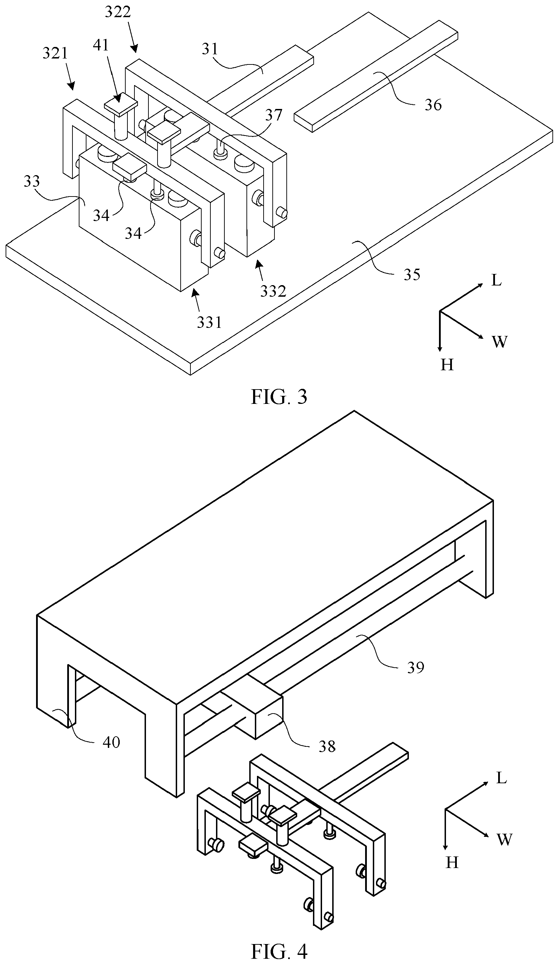

The at least two claws 32 in the alignment mechanism can include the first claw 321 and the second claw 322, where the first claw 321 may correspond to the first component 331, and the second claw 322 then corresponds to the second component 332. As shown in FIG. 3, during the alignment process of the first component 331 and the second component 332, the first component 331 is accommodated in the first holding space formed by the first holding parts 3241, and the second component 332 is accommodated in the second holding space formed by the second holding parts 3242.

In one possible implementation, both the first holding parts 3241 and the second holding parts 3242 move along the second direction W towards the components 33 until the length of the first holding space in the second direction W is equal to the length of the first component 331 in the second direction W, and the length of the second holding space in the second direction W is equal to the length of the second component 332 in the second direction W, that is, until the first holding parts 3241 and the second holding parts 3242 move to a position where they can no longer move towards the components 33 in the second direction W. Then, the centers of the first claw 321 and the first component 331 in the second direction W are on the same plane, and this plane is perpendicular to the second direction W; and the centers of the second claw 322 and the second component 332 in the second direction W are also on the same plane, and this plane is also perpendicular to the second direction W. Since the main body 323 of the first claw 321, the main body 323 of the second claw 322, and the connecting rod 31 are fixedly connected, the symmetrical axes of the first claw 321 and the second claw 322 in the second direction W coincide. That is, the centers of the first claw 321, the second claw 322, the first component 331, and the second component 332 in the second direction W are all located on the same plane, which is the first plane, where the first plane is perpendicular to the second direction W.

In this implementation, the claw 32 and the connecting rod 31 can be kept in a fixed position in the second direction W, and the position of the components 33 is adjusted only through the movement of the holding parts 324, thereby achieving the alignment of multiple components 33. Alternatively, while aligning the first and second components 33 in multiple components 33, it is also possible to adjust the position of components 33 and claws 32 simultaneously through the movement of the holding parts 324. When the holding parts 324 of the first claw 321 and the second claw 322 no longer move, the main body 323 of the claw 32 and the connecting rod 31 are fixed in the second direction W. Then, the holding parts 324 are controlled to move in the second direction W away from the components 33, releasing the components 33, and the connecting rod 31 along with the claw 32 moves along the first direction L to the positions corresponding to the third and fourth components 33. The positions of the third and fourth components 33 are adjusted only through the movement of the holding parts 324, thereby achieving the alignment of multiple components 33.

In another possible implementation, the first component 331 can be fixed at the first position, and the positions of the claw 32 and the connecting rod 31 are adjusted through the movement of the first holding parts 3241 towards the components 33 in the second direction W. When the first holding parts 3241 no longer move, the first claw 321 moves to the second position and is fixed at the second position. Since the claw 32 is fixedly connected to the connecting rod 31, the second claw 322 is also moved and fixed at the second position. The second holding parts 3242 move towards the components 33 in the second direction W, and the second component 332 is adjusted to the third position through the movement of the second holding parts 3242.

In this implementation, the first component 331 is not moved and the position of the first claw 321 is adjusted based on the first position of the first component 331. Since the first claw 321 and the second claw 322 are fixedly connected through the connecting rod 31, the position of the second claw 322 remains consistent with the position of the first claw 321, and then the position of the second component 332 is adjusted based on the second position of the second claw 322. Thus, the third position of the second component 332 corresponds to the first position of the first component 331, meaning the center of the second component 332 in the second direction W aligns with the center of the first component 331 in the second direction W. Similarly, for alignment of the next component 33, the first claw 321 moves to the position of the second component 332, adjusts the position of the claw 32 based on the position of the second component 332, and then adjusts the position of the next component 33 based on the position of the claw 32.

When the alignment mechanism is equipped with more than two claws 32, it can simultaneously adjust the alignment of more than two components 33. For instance, the claws 32 can be fixed in the second direction W, and more than two claws 32 are used simultaneously to adjust the alignment of the components 33; or, the positions of the claws 32 are adjusted based on the position of the first component 33 among the more than two components 33, and then the positions of other components 33 are adjusted based on the positions of the claws 32.

The alignment mechanism provided by the embodiments of this application can take the position of a previous component 33 as a reference, and align the center of the next component 33 with the center of the previous component 33, thus gradually adjusting each component 33 among multiple components 33 individually. When the sizes of the components 33 that need to be aligned in the second direction W are not completely the same, it can ensure that each component 33 can be adjusted, thereby achieving the consistency of alignment among multiple components 33 and improving the product qualification rate.

According to some embodiments, optionally, the alignment mechanism further includes: a fixing block 34, where the fixing block 34 is configured to fix the first component 331 at the first position.

In the implementation where the position of the claw 32 is adjusted based on the first position of the first component 331 and then the position of the second component 332 is adjusted based on the position of the claw 32, there can be various ways to fix the first component 331 at the first position. For example, a limiting structure can be provided on a support plate 35 where the components 33 are placed, to limit the movement of the first component 331 in the second direction W; or, fixtures can be equipped in the second direction W to limit the movement of the first component 331 in the second direction W. In one implementation, a fixing block 34 can be provided in the alignment mechanism to fix the first component 331 at the first position.

As shown in FIG. 2 and FIG. 3, the fixing block 34 can apply a certain pressure on the first component 331 in the third direction H, so that when the first component 331 is subjected to force in the second direction W, it can generate enough friction to reduce the possibility of the first component 331 moving in the second direction W.

The fixing block 34 can be a structure not connected to the claw 32, that is, the fixing block 34 can be connected to devices such as a hydraulic press that can provide pressure, to apply pressure on the first component 331. The fixing block 34 can also be connected to the claw 32, for example, connected to the main body 323 of the claw 32. In this case, the fixing block 34 can move relative to the claw 32. That is, when the fixing block 34 fixes the first component 331 at the first position, the fixing block 34 does not move relative to the first component 331 when subjected to other forces, and the first claw 321 adjusts the position of the claw 32 based on the first position of the first component 331, with the first claw 321 moving relative to the fixing block 34 in the second direction W.

Providing the fixing block 34 can achieve the fixation of the first component 331, reducing the possibility of moving the first component 331 when adjusting the position of the claw 32 based on the first position of the first component 331, which is beneficial for maintaining the stability of the first component 331.

According to some embodiments, optionally, two ends of the main body 323 in the second direction W are each provided with an extension part 325 extending along a third direction H, where the extension part 325 is configured to connect the main body 323 and the holding parts 324.

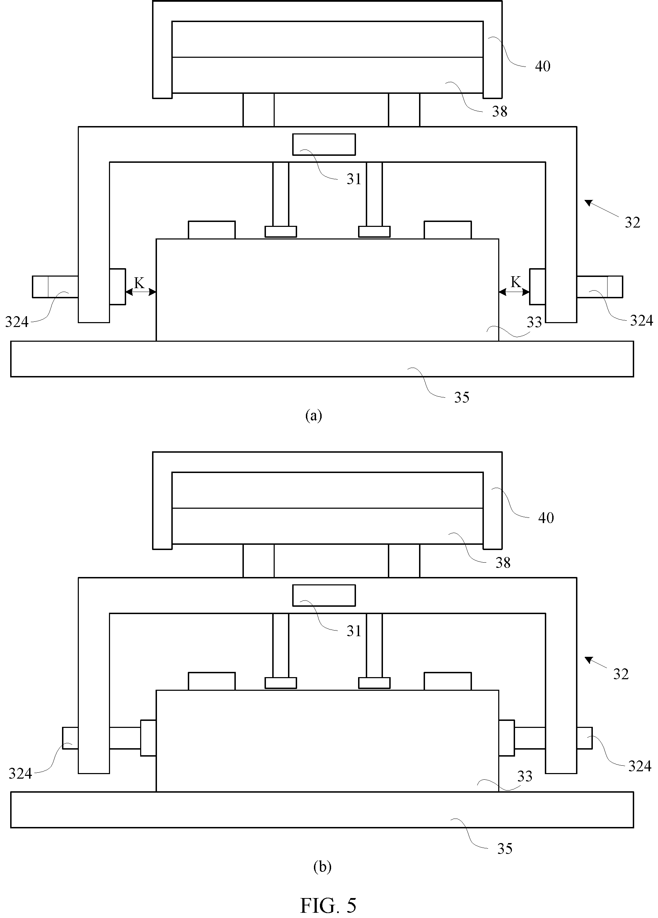

The holding parts 324 can be connected to the main body 323 with extension parts 325. For example, when the holding parts 324 and the main body 323 are both parallel to the second direction W, as shown in FIG. 2 and FIG. 3, extension parts 325 extending along the third direction H can be provided between them, where one end of the extension parts 325 connects to the main body 323, and the other end connects to the holding parts 324. The extension part 325 can also be provided with a channel, allowing the holding part 324 to move along the second direction W while being connected to the extension part 325. In some embodiments, the first claw 321 can include first extension parts 3251, and the second claw 322 can include second extension parts 3252, as shown in FIG. 5.

The extension parts 325 connect the main body 323 and the holding parts 324, providing a connecting function for the parallel arrangement of the main body 323 and the holding parts 324, which is beneficial for the holding parts 324 to adjust the size of the holding space in the second direction W, thereby achieving the alignment of the components 33.

According to some embodiments, optionally, the alignment mechanism further includes: a push rod 36, where the push rod 36 is configured to push the second component 332 towards the first component 331 along the first direction L after the second component 332 is adjusted to the third position.

The push rod 36 can be disposed along the first direction L, and when moving in the first direction L, it can push the component 33 to make the component 33 move in the first direction L.

Before the alignment mechanism adjusts the alignment of the components 33, the components 33 may be placed on the support plate 35. For example, the components 33 may be arranged in order along the first direction L using fixtures and other devices. In the process of aligning a group of components 33, the number of components 33 placed for the first time equals the number of claws 32. For example, if a group of components 33 includes ten components 33, and there are two claws 32 connected to the connecting rod 31 of the alignment mechanism, then only two components 33, for example, the first component 331 and the second component 332, are placed on the support plate 35 at the first time. Taking FIG. 3 as an example, after the claws 32 adjust the first component 331 and the second component 332 to the appropriate positions in the second direction W, the push rod 36 pushes the second component 332 towards the first component 331 along the first direction L, making the second component 332 move towards the first component 331 in the first direction L until the second component 332 fits with the first component 331. Then, the push rod 36 can move in the direction away from the second component 332, leaving space for placing the third component 33. When alignment of the third component 33 is completed, the push rod 36 can push the third component 33 towards the second component 332 along the first direction L, allowing the third component 33 to fit with the second component 332.

In one possible implementation, the first component 331 can be fixed at the first position by the fixing block 34, and then when the second component 332 cannot move further towards the first component 331, the push rod 36 stops pushing the second component 332. When the components 33 are placed on the support plate 35, the surface of components 33 perpendicular to the first direction L is coated with an adhesive, such as glue, and then when the second component 332 fits with the first component 331, they can stick together, allowing the two components to adhere.

After the components 33 are aligned, the push rod 36 can push the second component 332 towards the first component 331, making them fit together. In the case where an adhesive is pre-applied to both, this also helps in adhering the first component 331 to the second component 332. Furthermore, this can also reduce the space required for the support plate 35, improving the space utilization rate of the assembly station.

According to some embodiments, optionally, the alignment mechanism further includes: a limiting block 37, where the limiting block 37 is configured to restrict movement of the second component 332 in the third direction H.

The limiting block 37 can be a structure not connected to the claw 32, for example, connected to a hydraulic press or other devices that can provide pressure. The limiting block 37 can alternatively be connected to the claw 32, for example, connected to the main body 323 of the second claw 322. FIG. 3 only shows the case where the limiting block 37 is connected to the second claw 322. As shown in FIG. 3, the limiting block 37 can extend along the third direction H and apply a certain pressure on the second component 332 in the third direction H, which can eliminate bulges, if existent, at the bottom of some components 33, such as battery cells. The limiting block 37 being configured to restrict movement of the second component 332 in the third direction H means the pressure applied by the limiting block 37 does not affect the movement of the second component 332 in the first direction L and the second direction W. The movement of the second component 332 in the third direction H can be understood as the possibility of the second component 332 overturning due to non-uniform force during the movement in the first direction L or the second direction W, where there is a force component in the third direction H during the overturning process, and this force component can be considered as the movement of the second component 332 in the third direction H.

In one possible implementation, the limiting block 37 only contacts the surface of the second component 332, and the applied pressure is 0; or, the limiting block 37 is away from the surface of the second component 332 by a certain distance but still able to restrict the movement of the second component 332 in the third direction H without causing it to overturn. This not only does not increase the friction force when the second component 332 moves in the first direction L and the second direction W but also reduces the possibility of the second component 332 overturning.

An end of the limiting block 37 that contacts the second component 332 can be provided with a platform extending along the first direction L and the second direction W so that the second component 332 can be restricted by the platform during the movement in both the first direction L and the second direction W to reduce the possibility of overturning.

During the process of moving the component 33 to adjust its position, the limiting block 37 can restrict the movement of the component 33 in the third direction H, that is, limiting the position of the component 33 can reduce the possibility of the component 33 overturning during its movement in the first direction L or the second direction W, thereby making components 33 comparatively stable during alignment adjustment, improving work efficiency, and achieving a good alignment effect.

According to some embodiments, optionally, the fixing block 34 is configured to fix the first component 331 in the third direction H, and the fixing block 34 is provided with a platform part, where the platform part is perpendicular to the third direction H.

The fixing block 34 can apply pressure to the first component 331 in the third direction H to fix the first component 331 at the first position, where at least part of the fixing block 34 extends along the third direction H, and the end of the fixing block 34 that contacts the first component 331 is provided with a platform part. The cross-sectional shape of the platform part on a plane perpendicular to the third direction H can be any shape.

The provision of the platform part allows for a larger force-bearing area on the first component 331 when the fixing block 34 applies pressure to the first component 331, reducing the possibility of damage to the surface of the first component 331 due to pressure.

According to some embodiments, optionally, the alignment mechanism further includes: a first slide rail 38, where the first slide rail 38 extends along the second direction W, and the claw 32 is provided with a connecting part 41, with a first end 411 of the connecting part fixedly connected to the claw 32 and a second end 412 of the connecting part 41 connected to the first slide rail 38, where the second end 412 is able to slide along the second direction W in the first slide rail 38.

As shown in FIG. 4, the claw 32 can be connected to the first slide rail 38 to be able to move in the second direction W, where the claw 32 is connected to the first slide rail 38 through the connecting part 41. Since the connecting part 41, the claw 32, and the connecting rod 31 are all fixedly connected, the connecting part 41 may be provided on any one of the claws 32 or on the connecting rod 31.

The connecting part 41 extends along the third direction H. One end, that is, the first end 411, of the connecting part 41 is fixedly connected to the claw 32, allowing the connecting rod 31, when moving in the second direction W, to drive the claw 32 and the connecting rod 31 to move together in the second direction W. The other end, that is, the second end 412, of the connecting part 41, is connected to the first slide rail 38, allowing the connecting part 41 to slide along the second direction W in the first slide rail 38. The first slide rail 38 may have a cavity to accommodate the second end 412, and the second end 412 may be provided with a platform, where the platform is accommodated in the cavity of the first slide rail 38 and can be clamped in the slide rail in the third direction H, allowing the connecting part 41 to remain in the first slide rail 38 when moving along the second direction W.

The provision of the first slide rail 38 enables the movement of the claw 32 in the second direction W, allowing the claw 32 to be adjusted in the second direction W based on the position of the component 33. Moreover, the connecting part 41, the claw 32, and the connecting rod 31 are fixedly connected and move together, which can also make the component 33 and the claw 32 always align with the same reference, improving the accuracy of alignment and the product qualification rate.

According to some embodiments, optionally, the first slide rail 38 is provided with a first locking mechanism, where the first locking mechanism is configured to restrict movement of the claw 32 along the first slide rail 38.

The first locking mechanism can be provided within the first slide rail 38, fixing the claw 32 after the claw 32 moves to an appropriate position, thus restricting the movement of the claw 32 in the second direction W. For example, after the first claw 321 adjusts the claw 32 to the second position based on the first position of the first component 331, the first locking mechanism can fix the second end 412 of the connecting part 41 within the first slide rail 38, and then in the subsequent alignment process, the claw 32 no longer moves in the second direction W.

After the position adjustment of the claw 32 is completed, the first locking mechanism can fix the position of the claw 32 on the first slide rail 38, so that the same reference is used for adjustment when the claw 32 adjusts other components 33 in the second direction W. This way, the components 33 can all be adjusted with the same reference, allowing for alignment of multiple components 33, achieving a good alignment effect, and thereby improving the product qualification rate.

According to some embodiments, optionally, the alignment mechanism further includes: a second slide rail 39, where the second slide rail 39 extends along the first direction L, and the first slide rail 38 is able to slide along the first direction L in the second slide rail 39.

To enable the alignment mechanism to adjust multiple components 33 arranged along the first direction L, when the number of claws 32 is less than the number of components 33 in one group, a second slide rail 39 extending along the first direction L can be provided, allowing the claws 32 to first adjust part of the components 33, then move along the first direction L to the positions of the unadjusted components 33 to continue adjusting other components 33.

As shown in FIG. 4, the second slide rail 39 can be arranged to extend along the first direction L through the first slide rail 38, allowing the first slide rail 38 to slide along the first direction L in the second slide rail 39. The second slide rail 39 can alternatively be provided as a structure similar to the first slide rail 38, that is, the first slide rail 38 is connected to the second slide rail 39 through a connecting structure, and this connecting structure is able to slide along the first direction L in the second slide rail 39, driving the first slide rail 38 to slide along the first direction L.

The provision of the second slide rail 39 enables the movement of the claw 32 in the first direction L, allowing the claw 32 to flexibly move along the first direction L when multiple components 33 need to be aligned, thereby achieving the alignment of all components 33. The provision of the second slide rail 39 can also make the alignment mechanism suitable for the alignment of components 33 of various specifications, reducing production costs.

According to some embodiments, optionally, the alignment mechanism further includes: a support bracket 40, where the support bracket 40 is configured to support the second slide rail 39.

The support bracket 40 can be a part that is relatively fixed to the assembly station. The support bracket 40 typically provides support for mechanical structures. In the embodiments of this application, the second slide rail 39 is fixedly connected to the support bracket 40, and the support bracket 40 provides support for the second slide rail 39.

The support bracket 40 can fix the second slide rail 39 at a corresponding position in the assembly station, allowing the claw 32 to move within a preset range, thus achieving automated adjustment, saving labor input, and improving production efficiency.

According to some embodiments, optionally, the second slide rail 39 is provided with a second locking mechanism, where the second locking mechanism is configured to restrict movement of the first slide rail 38 along the second slide rail 39.

Similar to the first slide rail 38, the second slide rail 39 can also be equipped with a locking mechanism, that is, a second locking mechanism. The second locking mechanism can restrict the movement of the first slide rail 38 in the first direction L, that is, restrict the movement of the claws 32 in the first direction L. When the claws 32 have adjusted the alignment of some of the components 33 and need to adjust the alignment of some other components 33, the first slide rail 38 can be controlled to move along the first direction L in the second slide rail 39. When the first slide rail 38 moves to an appropriate position, the second locking mechanism can fix the first slide rail 38, that is, restrict the movement of the first slide rail 38 in the first direction L, making it easy for the claws 32 to adjust the alignment of the components 33 in the second direction W.

The restriction of the movement of the claws 32 in the first direction L by the second locking mechanism can put the claws 32 in appropriate positions to adjust the alignment of components 33, reducing the possibility of misalignment between the claws 32 and the components 33 that could lead to incorrect adjustment of the components 33. This can improve the accuracy of the alignment of the components 33 by the claws 32, thereby improving the product qualification rate.

According to some embodiments, optionally, distance between the first claw 321 and the second claw 322 is 5-10 mm.

There is a certain gap between the first claw 321 and the second claw 322, which matches the gap between adjacent components 33 placed on the support plate 35 before adjustment. This gap can reduce the possibility of components 33 adhering to each other before being adjusted to the appropriate positions, which compromises any further alignments. If the gap is too small, adjacent components 33 placed on the support plate 35 can easily stick together, making it difficult to adjust their positions. If the gap is too large, it can increase the volume of the alignment mechanism, occupying more space, and require that the components 33 move a longer distance when pushed by the push rod 36, consuming more time, which is not conducive to improving production efficiency.

An appropriate distance can both save space required for placing components 33 and avoid the adhesion of adjacent components 33 before adjustment due to placement errors, which is conducive to the alignment of components 33, making the centerline of each component 33 in the second direction W located on a plane perpendicular to the second direction W, achieving a good alignment effect, and thereby improving the product qualification rate.

According to some embodiments, optionally, a maximum distance the holding part 324 moves along the second direction W is 5-10 mm.

The distance the holding part 324 moves along the second direction W refers to the distance for which one of the multiple holding parts 324 spaced along the second direction W moves from the farthest end to the nearest end relative to the component 33 in the second direction W. Taking FIG. 5 as an example, (a) in FIG. 5 is a schematic diagram illustrating the holding parts 324 moving to the farthest ends from the component 33, and (b) in FIG. 5 is a schematic diagram illustrating the holding parts 324 moving to the nearest ends from the component 33, where the movable distance K is the maximum distance the holding parts 324 can move along the second direction W.

If the maximum distance is too small, the space formed between the holding parts 324 would be too small, and if there is a slight error in the position where the component 33 is placed relative to the starting position of the claw 32, the claw 32 can easily interfere with the component 33 when moved to the position corresponding to the component 33. If the maximum distance is too large, the holding parts 324 need to move a longer distance in the second direction W to complete the adjustment of the component 33, consuming more time, which is not conducive to improving work efficiency.

An appropriate distance allows for accommodation of components 33 of most sizes within the holding space without requiring the holding parts 324 to move a long distance to achieve the alignment of the components 33, making the alignment mechanism provided by the embodiments of this application suitable for components 33 of various sizes, achieving a good alignment effect while also improving production efficiency.

According to some embodiments, optionally, the first claw 321 includes a first main body 3231, where the first main body 3231 is provided with a third slide rail extending along the second direction W, the fixing block 34 is connected to the third slide rail, and the fixing block 34 is able to slide along the third slide rail.

In one possible implementation, the fixing block 34 can be connected to the main body 323 of the first claw 321, where the first main body 3231 is equipped with a third slide rail, and the fixing block 34 is connected to the third slide rail, allowing the fixing block 34 to slide relative to the first main body 3231 along the third slide rail. When the fixing block 34 fixes the first component 331 at the first position, the holding parts 324 adjust the position of the claw 32 in the second direction W based on the first position, and then the fixing block 34 remains stationary relative to the first component 331 and moves relative to the first main body 3231 in the second direction W. Therefore, the third slide rail extends along the second direction W, allowing the fixing block 34 to move relative to the first main body 3231 in the second direction W.

The fixing block 34 is connected to the first main body 3231 through the third slide rail, which enables more accurate application of pressure to the first component 331, thereby fixing the first component 331 at the first position, allowing the alignment mechanism to adjust the alignment of components 33 with a fixed reference, achieving a good alignment effect.

The embodiments of this application provide an alignment mechanism for adjusting alignment of multiple components 33. The alignment mechanism includes a connecting rod 31, with at least two claws 32 spaced along an extension direction of the connecting rod 31, and optionally, the at least two claws 32 can be fixedly connected to the connecting rod 31. The at least two claws may include a first claw 321 and a second claw 322, where a first main body 3231 of the first claw 321 is fixedly connected to the connecting rod 31, and first holding parts 3241 of the first claw 321 form a first holding space; and a second main body 3232 of the second claw 322 is fixedly connected to the connecting rod 31, and second holding parts 3242 of the second claw 322 form a second holding space. The alignment mechanism may also include a fixing block 34 configured to fix a component 33 in the first holding space at its original position. The alignment mechanism may further include a limiting block 37 configured to restrict movement of a component 33 in the second holding space in the third direction H. The alignment mechanism may further include a first slide rail 38, with a connecting part 41 provided on the claw 32 and connected to the first slide rail 38. The alignment mechanism may further include a second slide rail 39, where the first slide rail 38 is able to slide within the second slide rail 39. The alignment mechanism may further include a support bracket 40, where the support bracket 40 is configured to support the second slide rail 39. The alignment mechanism may further include a push rod 36, to ensure that multiple components 33 can be closely arranged in the first direction L after their positions are adjusted in the second direction W.

The above described are merely specific implementations of this application that are not intended to limit the protection scope of this application. Any variations or replacements readily figured out by a person skilled in the art within the technical scope disclosed in this application fall within the protection scope of this application. Therefore, the protection scope of this application is subject to the protection scope of the claims.

## Claims

1. An alignment mechanism for adjusting alignment of multiple components, **characterized by** comprising:
a connecting rod, arranged to extend along a first direction; and
at least two claws, spaced from each other along the first direction on the connecting rod;
wherein the claw comprises: a main body, wherein the main body extends along a second direction and the first direction is perpendicular to the second direction; and holding parts spaced from each other along the second direction on the main body to form a holding space, wherein the holding parts are movable along the second direction to adjust size of the holding space in the second direction, thereby achieving alignment of the components.

2. The alignment mechanism according to claim 1, **characterized in that** each of the at least two claws is configured to adjust one of the multiple components.

3. The alignment mechanism according to claim 1 or 2, **characterized in that** the components comprise at least a first component and a second component; and
the at least two claws comprise a first claw and a second claw, wherein
the first claw comprises first holding parts, wherein the first holding parts form a first holding space, the first component is accommodated in the first holding space, the first holding parts are configured to adjust size of the first holding space based on a first position of the first component to adjust the first claw and fix the first claw at a second position, making centers of the first claw and the first component in the second direction located on a first plane, wherein the first plane is perpendicular to the second direction; and
the second claw comprises second holding parts, wherein the second holding parts form a second holding space, the second component is accommodated in the second holding space, and the second holding parts are configured to adjust size of the second holding space to adjust the second component to a third position, making centers of the second component and the second claw in the second direction located on the first plane.

4. The alignment mechanism according to claim 3, **characterized in that** the alignment mechanism further comprises:
a fixing block, wherein the fixing block is configured to fix the first component at the first position.

5. The alignment mechanism according to any one of claims 1 to 4, **characterized in that** two ends of the main body in the second direction are each provided with an extension part extending along a third direction, wherein the extension parts are configured to connect the main body and the holding parts.

6. The alignment mechanism according to any one of claims 3 to 5, **characterized in that** the alignment mechanism further comprises:
a push rod, wherein the push rod is configured to push the second component towards the first component along the first direction after the second component is adjusted to the third position.

7. The alignment mechanism according to any one of claims 3 to 6, **characterized in that** the alignment mechanism further comprises:
a limiting block, wherein the limiting block is configured to restrict movement of the second component in the third direction.

8. The alignment mechanism according to any one of claims 4 to 7, **characterized in that** the fixing block is configured to fix the first component in the third direction, and the fixing block is provided with a platform part, the platform part being perpendicular to the third direction.

9. The alignment mechanism according to any one of claims 1 to 8, **characterized in that** the alignment mechanism further comprises:
a first slide rail, wherein the first slide rail extends along the second direction, and the claw is provided with a connecting part, with a first end of the connecting part fixedly connected to the claw and a second end of the connecting part connected to the first slide rail, wherein the second end is able to slide along the second direction in the first slide rail.

10. The alignment mechanism according to claim 9, **characterized in that** the first slide rail is provided with a first locking mechanism, wherein the first locking mechanism is configured to restrict movement of the claw along the first slide rail.

11. The alignment mechanism according to claim 9 or 10, **characterized in that** the alignment mechanism further comprises:
a second slide rail, wherein the second slide rail extends along the first direction, and the first slide rail is able to slide along the first direction in the second slide rail.

12. The alignment mechanism according to claim 11, **characterized in that** the alignment mechanism further comprises:
a support bracket, wherein the support bracket is configured to support the second slide rail.

13. The alignment mechanism according to claim 11 or 12, **characterized in that**:
the second slide rail is provided with a second locking mechanism, wherein the second locking mechanism is configured to restrict movement of the first slide rail along the second slide rail.

14. The alignment mechanism according to any one of claims 3 to 13, **characterized in that** distance between the first claw and the second claw is 5-10 mm.

15. The alignment mechanism according to any one of claims 1 to 14, **characterized in that** a maximum distance the holding part moves along the second direction is 5-10 mm.

16. The alignment mechanism according to any one of claims 4 to 15, **characterized in that** the first claw comprises a first main body, wherein the first main body is provided with a third slide rail extending along the second direction, the fixing block is connected to the third slide rail, and the fixing block is able to slide along the third slide rail.
